# EUROPEAN PATENT APPLICATION

(11) **EP 4 664 606 A1**
(43) Date of publication of application: **17.12.2025**
(21) Application number: 24868507.5
(22) Date of filing: 27.08.2024
(51) Int. Cl.: H01M 10/613, H01M 10/6556, H01M 10/6551, H01M 50/207, H01M 50/24, H01M 50/249

(54) **BATTERY PACK AND DEVICE INCLUDING SAME**

(30) Priority: 21.09.2023 KR 20230126357
(71) Applicant: LG Energy Solution, Ltd., Seoul 07335 (KR)
(72) Inventor: CHOI, Inseop, Daejeon 34122 (KR)
(74) Representative: Plasseraud IP
(86) International application number: PCT/KR2024/012759
(87) International publication number: WO 2025/063528

(57) **Abstract**

The present disclosure provides a battery pack and a device including the same. The battery pack according to an embodiment of the present disclosure comprises: a battery module including a battery cell stack in which a plurality of battery cells are stacked and a module frame in which the battery cell stack is housed; and a pack frame in which the battery module is housed, wherein a cooling flow path through which a coolant flows is formed at the bottom part of the pack frame, an opening is formed at the bottom part of the pack frame, so that the downside part of the module frame and the coolant come into direct contact with each other, and at least one protrusion is formed on the outer surface of the downside part of the module frame.

## Description

### [TECHNICAL FIELD]

### CROSS-REFERENCE TO RELATED APPLICATION(S)

This application claims priority to and the benefit of Korean Patent Application No. 10-2023-0126357 filed in the Korean Intellectual Property Office on September 21, 2023, the entire contents of which are incorporated herein by reference.

The present disclosure relates to a battery pack and a device including the same, and more particularly, to a battery pack having improved cooling performance and a device including the same.

### [BACKGROUND]

The use of mobile devices such as cell phones, laptops, camcorders, and digital cameras has been routinized in modern society, which accelerates the development of technologies in the fields related to the mobile devices. Further, as a measure to solve the atmospheric pollution caused from existing gasoline vehicles that uses fossil fuels, rechargeable secondary batteries are being used as power sources for electric vehicles (EV), hybrid electric vehicles (HEV), plug-in hybrid electric vehicles (P-HEV) and so on. Thus, the necessity to develop the secondary batteries is increasing.

Presently, commercially available batteries include nickel-cadmium batteries, nickel-hydrogen batteries, nickel-zinc batteries, and lithium batteries. Of these batteries, lithium secondary batteries are emerging as the most popular, as they do not suffer from the memory effect, and therefore, are freely rechargeable, have low self-discharge rates, and have high energy density, as compared to nickel-based secondary batteries.

Typically, a lithium secondary battery uses a lithium-based oxide and a carbon material as a positive electrode active material and a negative electrode active material, respectively. The lithium secondary battery includes an electrode assembly fabricated by disposing a separator between a positive electrode plate and a negative electrode plate, which are coated with the positive electrode active material and the negative electrode active material, respectively, and a battery case that hermetically houses the electrode assembly together with an electrolyte.

In general, according to the exterior shapes of battery cases, lithium secondary batteries may be classified into can-shaped secondary batteries fabricated by mounting the electrode assembly in a metal can, and pouch-shaped secondary batteries fabricated by mounting the electrode assembly in a pouch made of an aluminum laminate sheet.

In case of secondary batteries used for small-size devices, two or three battery cells are arranged, and in case of secondary batteries used for medium- and large-size devices such as automobiles, a battery module is used, which includes multiple battery cells electrically connected to each other. In the battery module, the multiple battery cells are connected in series or parallel to form a battery cell stack, which improves the capacity and the power. One or more battery modules may configure a battery pack by being mounted together with various control and protection systems such as a battery management system (BMS), and a cooling system.

When a secondary battery is heated over a proper temperature, the performance of the secondary battery may deteriorate, and in the worst case, there is also a risk of an explosion or ignition. In particular, a plurality of secondary batteries, that is, a battery module or a battery pack having battery cells can accumulate the heat emitted from the plurality of battery cells in a narrow space, which may raise the temperature of the battery module quickly and severely. In other words, a battery module including a large number of battery cells, and a battery pack mounted with such a battery module can obtain high output, but it is not easy to remove heat generated from the battery cells during charging and discharging. When the heat dissipation of the battery cell is not properly performed, deterioration of the battery cells is accelerated, and the lifetime is shortened, and when thermal runaway occurs, the possibility of explosion or ignition increases.

Moreover, in the case of a battery module included in a vehicle battery pack, it is frequently exposed to direct sunlight and may be placed under high-temperature conditions such as summer or desert areas.

Therefore, when configuring a battery module or a battery pack, it is very important to ensure a stable and effective cooling performance.

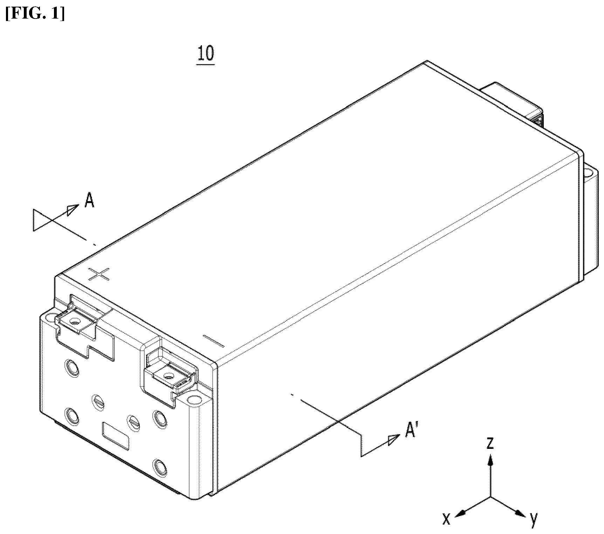

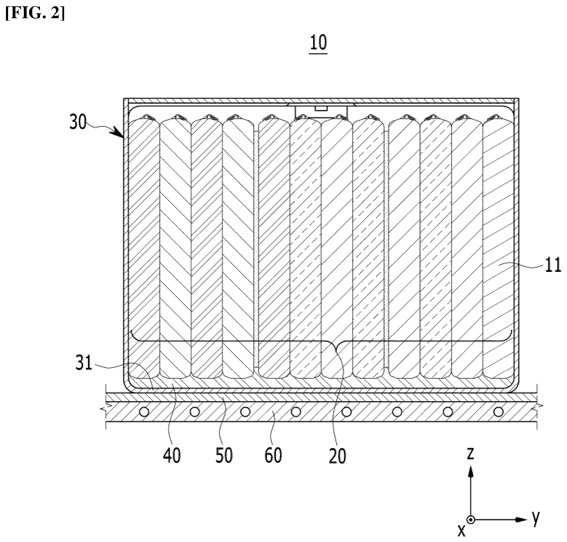

FIG. 1 is a perspective view showing a conventional battery module, and FIG. 2 is a cross-sectional view showing a cross section taken along the cutting line A-A' of FIG. 1. In particular, FIG. 2 further shows a heat transfer member and a heat sink located under the battery module.

Referring to FIGS. 1 and 2, a conventional battery module 10 is configured such that a plurality of battery cells 11 are stacked to form a battery cell stack 20, and the battery cell stack 20 is housed in a module frame 30.

As described above, since the battery module 10 includes a plurality of battery cells 11, it generates a large quantity of heat in a charge and discharge process. As a cooling means, the battery module 10 may include a thermally conductive resin layer 40 located between the battery cell stack 20 and the bottom part 31 of the module frame 30. In addition, when the battery module 10 is mounted on the pack frame to form a battery pack, a heat transfer member 50 and a heat sink 60 may be located in sequence under the battery module 10. The heat transfer member 50 may be a heat dissipation pad. The heat sink 60 may have a coolant flow path formed therein.

The heat generated from the battery cell 11 is transferred to the outside of the battery module 10 sequentially via the thermally conductive resin layer 40, the bottom part 31 of the module frame 30, the heat transfer member 50, and the heat sink 60.

However, in the case of the conventional battery module 10, the heat transfer path is complicated as described above, and thus, it is difficult for the heat generated from the battery cell 11 to be effectively transferred. The module frame 30 itself can deteriorate the heat conduction characteristics, and a fine air layer such as an air gap that can be formed between each of the module frame 30, the heat transfer member 50, and the heat sink 60 can also become the factor for deteriorating the heat conduction characteristics.

Since other demands such as an increase in capacity for the battery module continue, it may be practically necessary to develop a battery module that can satisfy all of these various requirements while improving cooling performance.

### [DETAILED DESCRIPTION OF THE INVENTION]

### [Technical Problem]

It is an object of the present disclosure to provide a battery pack having improved cooling performance and a device including the same.

However, the technical objects solved by the embodiments of the present disclosure are not limited to those disclosed above, and may be expanded in various ways within the scope of the technical idea included in the present disclosure.

### [Technical Solution]

A battery pack according to an embodiment of the present disclosure comprises: a battery module including a battery cell stack in which a plurality of battery cells are stacked and a module frame in which the battery cell stack is housed; and a pack frame in which the battery module is housed, wherein a cooling flow path through which a coolant flows is formed at the bottom part of the pack frame, wherein an opening is formed at the bottom part of the pack frame, so that the downside part of the module frame and the coolant come into direct contact with each other, and wherein at least one protrusion is formed on the outer surface of the downside part of the module frame.

The opening is a region formed on the upper side of the cooling flow path, and may communicate a space between the cooling flow path and the bottom part of the pack frame.

At least one protrusion may be formed on the outer surface of the downside part of the module frame.

The protrusion may be in the form of a plate that protrudes vertically from the outer surface of the downside part of the module frame.

One end of the protrusion may abut on the lower end of the cooling flow path.

One end of the protrusion may be spaced apart from the lower end of the cooling flow path.

The protrusion may extend along one direction of the battery module and guide the flow of the coolant along the one direction.

The protrusion may be integrally formed with the module frame through an extrusion process.

The protrusion may be welded and joined to the outer surface of the downside part of the module frame.

A gasket for preventing leakage of the coolant may be located along the edge of the opening, between the downside part of the module frame and the bottom part of the pack frame.

The battery module may be mounted and coupled to the bottom part of the pack frame.

The battery module may include a mounting part having a mounting hole formed therein. A mounting bolt may passe through the mounting hole to be fastened to the bottom part of the pack frame, or passes through pack frame holes formed in the bottom part of the pack frame to be fastened with a nut.

A gasket for preventing leakage of the coolant may be located along the edge of the opening, between the downside part of the module frame and the bottom part of the pack frame.

A device according to an embodiment of the present disclosure may comprise a battery pack which comprises: a battery module including a battery cell stack in which a plurality of battery cells are stacked and a module frame in which the battery cell stack is housed; and a pack frame in which the battery module is housed, wherein a cooling flow path through which a coolant flows is formed at the bottom part of the pack frame, and wherein an opening is formed at the bottom part of the pack frame, so that the downside part of the module frame and the coolant come into direct contact with each other.

### [Advantageous Effects]

According to embodiments of the present disclosure, a cooling flow path through which a coolant flows is formed at the bottom part of the pack frame, and the downside part of the module frame comes into direct contact with the coolant flowing through the cooling flow path, thereby improving cooling performance compared to conventional battery pack structures in which the bottom part of the pack frame exist between the downside part of the module frame and the coolant.

Further, the surface area with which the coolant contacts is expanded via the protrusion protruding from the downside part of the module frame, thereby improving the cooling performance of the module.

Further, a coolant channel is formed in the cooling flow path via a protrusion that protrudes from the downside part of the module frame, thereby improving the flowability of the coolant.

Further, a gasket is located between the downside part of the module frame and the bottom part of the pack frame, thereby achieving the effects of fixing the module and preventing leakage of coolant.

The effects of the present disclosure are not limited to the effects mentioned above and additional other effects not described above will be clearly understood from the description of the appended claims by those skilled in the art.

### [BRIEF DESCRIPTION OF THE DRAWING]

FIG. 1 is a perspective view showing a conventional battery module.
FIG. 2 is a cross-sectional view showing a cross section taken along the cutting line A-A' of FIG. 1.
FIG. 3 is a perspective view showing a pouch-type battery according to an embodiment of the present disclosure.
FIG. 4 is an exploded perspective view showing a battery module according to an embodiment of the present disclosure.
FIG. 5 is a partial perspective view of a battery module and a battery pack according to an embodiment of the present disclosure.
FIG. 6 is a cross-sectional view showing a cross section cut along the cutting line B-B' of FIG. 5.
FIG. 7 is a cross-sectional view of a battery module and a battery pack according to another embodiment of the present disclosure.
FIG. 8 is a perspective view showing the battery module of FIG. 4 while changing an angle so that its downside part can be made visible in a state where the battery module is assembled.
FIG. 9 is a partial perspective view showing a mounting method and a gasket of a battery module included in a battery pack.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

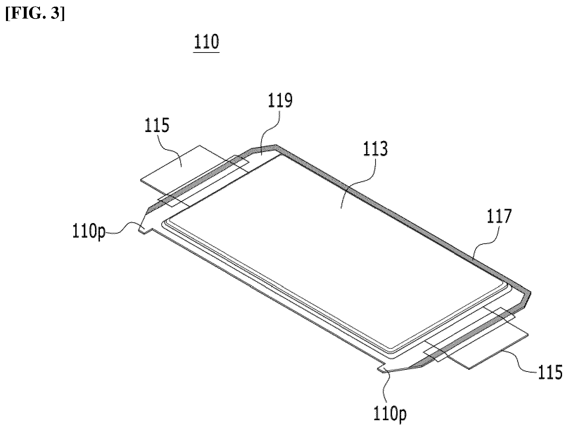

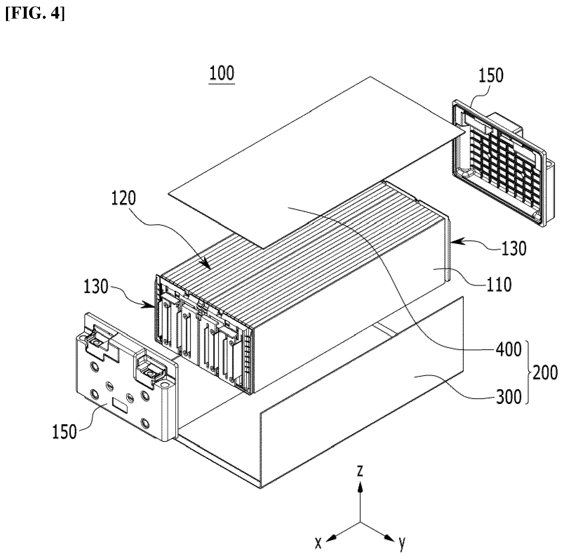

FIG. 3 is a perspective view showing a pouch-type battery according to an embodiment of the present disclosure. FIG. 4 is an exploded perspective view showing a battery module according to an embodiment of the present disclosure.

Referring to FIGS. 3 and 4, the battery module 100 according to the present embodiment includes a battery cell stack 120 formed by stacking a plurality of battery cells 110. In the battery cell stack 120, a plurality of battery cells 110 may be stacked in one direction. If the battery cells 110 according to the present embodiment are gathered in a plurality of numbers, the type thereof is not particularly limited. That is, the battery cell 110 according to the present embodiment may be a pouch-type battery cell, a prismatic battery cell, or a cylindrical battery cell. As an example, a case in which the battery cell 110 according to the present embodiment is a pouch-type battery cell will be described below.

The battery cell 110 according to one embodiment may have a structure in which two electrode leads 115 face each other and protrude from both side ends of the battery body 113. In another embodiment, a structure in which all of the electrode leads 115 of the battery cell 110 protrude together in one direction can also be used. One of the electrode leads 115 is a positive electrode lead, and the other is a negative electrode lead. Further, the battery cell 110 may be manufactured in the form of a pouch in which an electrode assembly (not shown) is housed in a battery case 117 including the battery body 113.

Further, the battery cell 110 includes a connecting part 119 that is a region that extends long along the edge, and a protrusion part 110p of the battery cell 110 called a bat-ear may be formed at the end of the connecting part 119. The protrusion part 110p may be formed in at least one of the two ends of the connecting part 119, and may protrude in a direction perpendicular to the extending direction of the connecting part 119. The protrusion part 110p may be hooked in a step region formed on one side of the lower frame described below, thereby preventing the battery cell 110 from flowing due to external impact. In particular, the battery cell 110 is a pouch-type battery cell, and the thickness of the battery body 113 may be formed larger than the thickness of the protrusion part 110p.

The battery cells 110 may be formed in a plurality of numbers, and the plurality of battery cells 110 may be stacked so as to be electrically connected to each other, thereby forming a battery cell stack 120. In particular, as shown in FIG. 4, a plurality of battery cells 110 may be stacked along one direction parallel to the y-axis while standing upright so that one surfaces of the battery body 113 (see FIG. 2) faces the other. Thereby, the electrode leads may protrude in a direction perpendicular to the direction in which the battery cells 110 are stacked. For example, in the battery cell 110, one electrode lead may protrude toward the x-axis direction, and the other electrode lead may protrude toward the -x-axis direction.

The battery module 100 according to the present embodiment may include a module frame 200 that houses a battery cell stack 120, and end plates 150 that covers the front and rear surfaces of the battery cell stack 120. In addition, the battery module 100 may further include a busbar frame 130 located between the end plate 150 and the battery cell stack 120.

As an example, the module frame 200 may include a U-shaped frame 300 in which an upper surface, a front surface, and a rear surface are open, and an upper plate 4 00 that covers the upper part of the battery cell stack 120. However, the module frame 200 is not limited thereto, and may be replaced with a frame of other shape, such as an L-shaped frame or a mono-frame that surrounds the battery cell stack 120 except for the front and rear surfaces.

The busbar frame 130 may be mounted with a busbar that electrically connects the electrode leads of the battery cell stack 120 in order to electrically connect the battery cell stack 120 that is stacked in parallel.

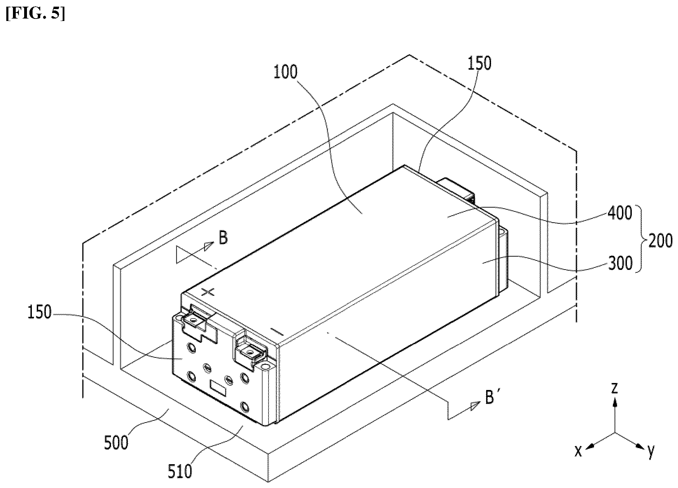

FIG. 5 is a partial perspective view of a battery module 100 and a battery pack according to an embodiment of the present disclosure.

Referring to FIG. 5, a battery pack according to an embodiment of the present disclosure includes a battery module 100 including a battery cell stack 120 in which a plurality of battery cells 110 are stacked, a module frame 200 in which the battery cell stack 120 is housed, and a pack frame 500 in which the battery module 100 is housed.

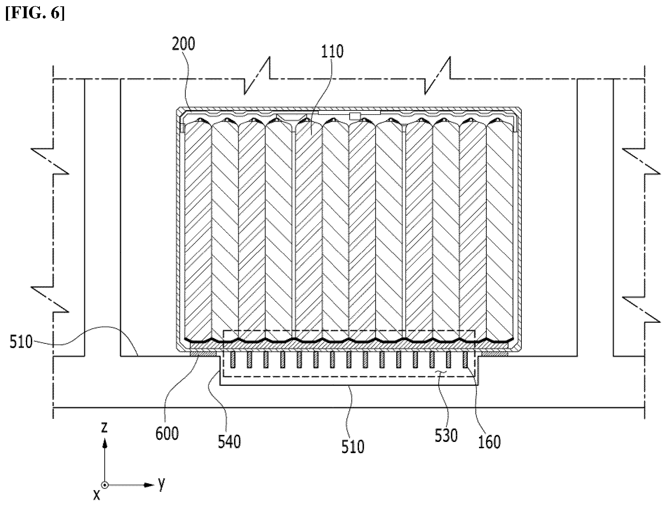

FIG. 6 is a cross-sectional view showing a cross section cut along the cutting line B-B' of FIG. 5.

Referring to FIGS. 5 and 6, a cooling flow path 530 through which a coolant flows is formed in the bottom part 510 of the pack frame 500. An opening 540 is formed in the bottom part 510 of the pack frame 500. The opening 540 is a region formed on the upper side of the cooling flow path 530, and can communicate the space between the cooling flow path 530 and the bottom part 510 of the pack frame 500.

More specifically, a cooling flow path 530, which is a space though which a coolant flows, may be formed inside the bottom part 510 of the pack frame 500. Although not specifically shown in the figure, this cooling flow path 530 may be connected to an inlet port and an outlet port provided in the pack frame 500. That is, the coolant flowing in through the inlet port may circulate along the cooling flow path 530, which is an internal space of the bottom part 510 of the pack frame 500, and may finally be discharged through the outlet port. The battery pack according to the present embodiment may have a water-cooled structure that cools the battery module via a coolant circulating structure.

Among the cooling flow paths 530, an opening 540 may be formed on the upper side of a region corresponding to a portion where the battery module 100 is located. The module frame 200 of the battery module 100 is located on the opening 540, so that the downside part of the module frame 200 and the coolant come into direct contact with each other. Thereby, it is possible to improve the cooling performance of the battery module according to the present embodiment, as compared to a conventional battery pack structure in which the bottom part 510 of the pack frame 500 exists between the module frame 200 and the coolant.

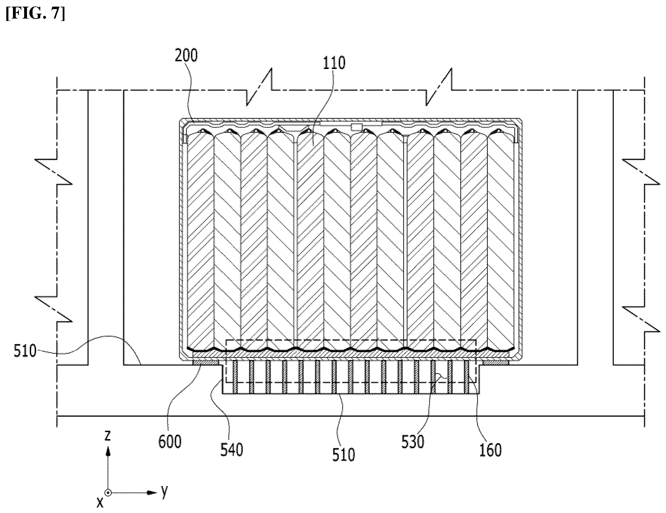

FIG. 7 is a cross-sectional view of a battery module and a battery pack according to another embodiment of the present disclosure. In particular, FIG. 7 shows a cross section of a battery module 100 placed on the opening 540 of a pack frame 500, similarly to FIG. 6.

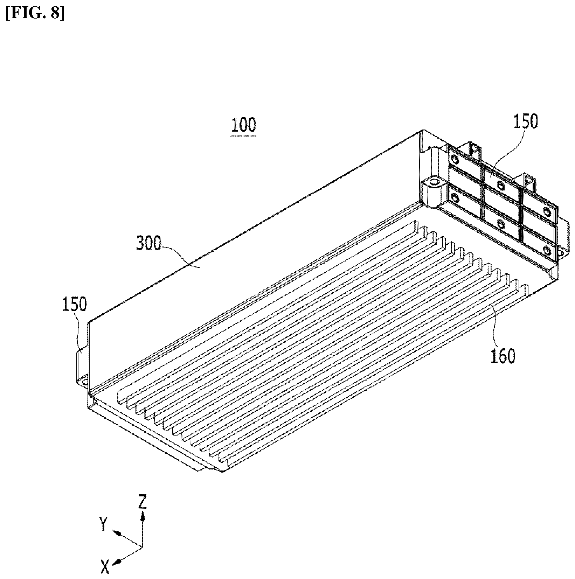

FIG. 8 is a perspective view showing the battery module of FIG. 4 while changing an angle so that its downside part can be made visible in a state where the battery module is assembled.

Referring to FIGS. 6 to 8, at least one protrusion 160 may be formed to protrude from the outer surface of the downside part of the module frame 200. The protrusion 160 may protrude vertically from the outer surface of the downside part of the module frame 200. One end of the protrusion 160 may abut on the lower end of the cooling flow path 530, or may be spaced apart from the lower end of the cooling flow path 530. FIG. 6 shows an embodiment in which one end of the protrusion 160 is spaced apart from the lower end of the cooling flow path 530. FIG. 7 shows an embodiment in which one end of the protrusion 160 abuts on the lower end of the cooling flow path 530.

The protrusion 160 can extend along one direction of the battery module 100 and guide the flow of the coolant along one direction. For example, the protrusion 160 can extend in a direction parallel to the outer surface of the downside part of the module frame 200 and perpendicular to the stacking direction of the battery cells 110. Thereby, the flow rate of the coolant flowing in each battery cell 110 can be similarly controlled, so that the plurality of battery cells 110 in the battery module 100 can be uniformly cooled.

One end of the protrusion 160 may be spaced apart from the lower end of the cooling flow path 530. Thereby, it is possible to provide a space through which the coolant can flow smoothly within the cooling flow path 530. Since the protrusion 160 does not directly abut on the lower end of the cooling flow path 530, the coolant can flow freely around the protrusion 160, thereby improving the cooling performance. As a result, respective battery cells 110 within the battery module 100 can be cooled uniformly, and the temperature deviation can be reduced, thereby improving the efficiency and stability of the battery pack. In addition, the contact area between the protrusion 160 and the coolant can be effectively adjusted to effectively control the temperature of the battery cells 110 within the battery module 100. That is, the phenomenon in which the coolant is concentrated in a specific area can be prevented. Thereby, heat exchange can be performed uniformly, and overheating or overcooling of a specific battery cell 110 can be prevented.

A plurality of protrusions 160 can be disposed spaced apart by the thickness of the battery cell 110. As the protrusions 160 are disposed to be spaced apart from each other in accordance with the thickness of the battery cell 110, the temperature difference between the battery cells 110 in the battery module 100 is minimized, and the whole battery module 100 can be uniformly cooled. In addition, it is possible to optimize the flowing path of the coolant and minimize the flow resistance. Thereby, the performance of the battery module 100 can be improved, and the lifetime of each battery cell 110 can be extended. However, the spacing between the protrusions 160 can be appropriately adjusted in consideration of the number or size of the battery cells 110.

As another example, the protrusion 160 may extend in the same direction as the stacking direction of the battery cells 110 while being parallel to the outer surface of the downside part of the module frame 200. Further, such protrusions 160 are arranged at regular intervals, so that the path and flow rate of the coolant flowing through the cooling flow path 530 may be controlled to improve the cooling performance.

The protrusion 160 according to an embodiment of the present disclosure may be integrally formed with the module frame 200 through an extrusion process. The protrusion 160 according to another embodiment of the present disclosure may be welded and joined to the outer surface of the downside part of the module frame 200.

Through the protrusion 160, the surface area of the downside part of the module frame 200 that the coolant contacts is expanded, and the cooling performance of the battery module can be improved as much as the surface area is expanded. Further, coolant channel is formed in the cooling flow path 530 via the protrusion 160 protruding from the downside part of the module frame 200, thereby improving the flowability of the coolant. The shape of the protrusion 160 is sufficient as long as it can expand the surface area that the coolant contacts, and improve the cooling performance or form a coolant channel. As an example, the protrusion 160 may be in the form of a plate that protrudes vertically from the outer surface of the downside part of the module frame 200. Further, the protrusion 160 is not limited to a shape and pattern, and is not limited to a position and process.

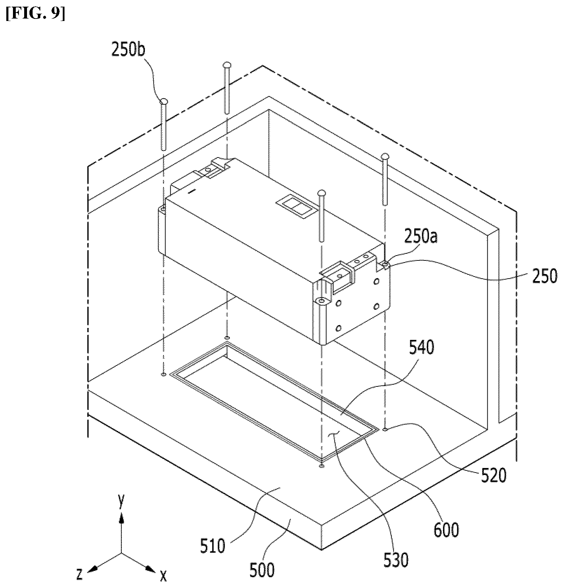

FIG. 9 is a partial perspective view showing a mounting method and a gasket of a battery module included in a battery pack.

Referring to FIG. 9, the battery module 100 according to an embodiment of the present disclosure may include a mounting part 250 having a mounting hole 250a formed therein. A pack frame hole 520 may be formed in a portion of the bottom part 510 of the pack frame 500 corresponding to the mounting hole 250a of the battery module 100. The battery module 100 may be mounted and coupled to the bottom part 510 of the pack frame 500. When the battery module 100 is housed in the pack frame 500, a mounting bolt 250b may pass through the mounting hole 250a to be fastened to the bottom part 510 of the pack frame 500. For example, a screw thread is formed on the inner wall of the pack frame hole 520, and the mounting bolt 250b can be directly coupled to this pack frame hole 520.

As another embodiment, the pack frame hole 520 can be a hole that penetrates the bottom part 510 of the pack frame 500. The battery module 100 can be fixed to the pack frame 500 in such a way that the mounting bolt 250b passes through the pack frame hole 520 of the bottom part 510 of the pack frame 500 to be coupled with a nut. Such a mounting coupling can be made for each battery module 100.

In order to prevent the coolant flowing through the cooling flow path 530 from leaking through the opening 540, a gasket 600 can be located between the downside part of the module frame 200 and the bottom part 510 of the pack frame 500. The gasket 600 may be formed of an elastic material. For example, the gasket 600 may be formed of a rubber. Therefore, when pressure is applied to the gasket 600, the shape of the gasket 600 may change, thereby preventing leakage of the coolant flowing through the cooling flow path 530. The gasket 600 may be located along the edge of the opening 540 of the pack frame 500.

The bottom part 510 of the pack frame 500 may include a groove in which the gasket 600 is mounted. The groove may be dug to a certain depth according to the shape of the opening 540. The gasket 600 may be fitted into the groove. The shape of the gasket 600 may correspond to the shape of the groove. The width of the gasket 600 may be smaller than the width of the groove, and the height of the gasket 600 may be larger than the height of the groove.

The gasket 600 may include a rib that is identifiable with the naked eye in order to prevent the groove from being separated during assembly or to prevent some regions of the gasket 600 from overlapping each other and to improve assembling efficiency. Further, the gasket 600 may include a protrusion that can be forcibly fitted to the groove so that some regions of the protrusion overlap with the groove in order to improve fixing force when fitted to the groove.

The gasket 600 is located between the downside part of the module frame 200 and the bottom part 510 of the pack frame 500, and the battery module 100 may be mounted and coupled to the bottom part 510 of the pack frame 500. In the case of the battery pack according to the present embodiment, when the battery module 100 is mounted and coupled to the bottom part 510 of the pack frame 500 to fix the battery module 100 to the pack frame 500, the fixing force applied to the battery module 100 can be utilized as the pressure applied to the gasket 600. While mounting and coupling the battery module 100 to the bottom part 510 of the pack frame 500, not only the battery module 100 can be fixed to the pack frame 500, but also the sealing performance can be enhanced to prevent the coolant from leaking from the cooling flow path 530. That is, the mounting coupling for the battery module 100 can be utilized as a means of preventing leakage of the coolant.

In the embodiments above, expressions indicating directions such as "front," "rear," "left," "right," "up," and "down" have been used. These expressions are used only to facilitate the description, and may vary, for example, depending on the location of a target object or an observer.

One or more battery modules according to an embodiment of the present disclosure described above may be mounted together with various control and protection systems such as a battery management system (BMS), a battery disconnect unit (BDU), and a cooling system, to form a battery pack.

The battery modules or the battery pack may be applied to various devices, which include, for example, transportation vehicles such as electric bicycles, electric vehicles, and hybrids. However, without being limited thereto, the battery modules or the battery pack may be applied to various devices using secondary batteries.

While the embodiments of the present disclosure have been described in detail, the technical scope of the present disclosure is not limited to the embodiments, and also includes various modifications and improvements made by one of ordinary skill in the art using the concepts defined in the claims attached therewith.

### [Description of Reference Numerals]

100: battery module
160: protrusion
200: module frame
250: mounting part
500: pack frame
510: bottom part
530: cooling flow path
540: opening
600: gasket

## Claims

1. A battery pack, comprising:
a battery module including a battery cell stack in which a plurality of battery cells are stacked and a module frame in which the battery cell stack is housed; and
a pack frame in which the battery module is housed,
wherein a cooling flow path through which a coolant flows is formed at the bottom part of the pack frame, and
wherein an opening is formed at the bottom part of the pack frame, so that the downside part of the module frame and the coolant come into direct contact with each other.

2. The battery pack according to claim 1,
wherein the opening is a region formed on the upper side of the cooling flow path, and communicates a space between the cooling flow path and the bottom part of the pack frame.

3. The battery pack according to claim 1,
wherein at least one protrusion is formed on the outer surface of the downside part of the module frame.

4. The battery pack according to claim 3,
wherein the protrusion is in the form of a plate that protrudes vertically from the outer surface of the downside part of the module frame.

5. The battery pack according to claim 4,
wherein one end of the protrusion abuts on the lower end of the cooling flow path.

6. The battery pack according to claim 4,
wherein one end of the protrusion is spaced apart from the lower end of the cooling flow path.

7. The battery pack according to claim 4,
wherein the protrusion extends along one direction of the battery module and guides the flow of the coolant along the one direction.

8. The battery pack according to claim 3,
wherein the protrusion is integrally formed with the module frame through an extrusion process.

9. The battery pack according to claim 3,
wherein the protrusion is welded and joined to the outer surface of the downside part of the module frame.

10. The battery pack according to claim 1,
wherein a gasket for preventing leakage of the coolant is located along the edge of the opening, between the downside part of the module frame and the bottom part of the pack frame.

11. The battery pack according to claim 1,
wherein the battery module is mounted and coupled to the bottom part of the pack frame.

12. The battery pack according to claim 11,
wherein the battery module includes a mounting part having a mounting hole formed therein, and
a mounting bolt passes through the mounting hole to be fastened to the bottom part of the pack frame, or passes through pack frame holes formed in the bottom part of the pack frame to be fastened with a nut.

13. The battery pack according to claim 11,
wherein a gasket for preventing leakage of the coolant is located along the edge of the opening, between the downside part of the module frame and the bottom part of the pack frame.

14. A device comprising the battery pack according to claim 1.
